# EUROPEAN PATENT APPLICATION

(11) **EP 0 586 192 A1**
(43) Date of publication of application: **09.03.1994**
(21) Application number: 93306766.2
(22) Date of filing: 25.08.1993
(51) Int. Cl.: B60R 25/00, B60R 25/10, G08G 1/017, G08B 13/186

(54) **Electronic identification system with anti-tampering protection**

(30) Priority: 29.08.1992 GB 9218439
(71) Applicant: Pilkington Micro-Electronics Limited, Merseyside WA10 3TT (GB)
(72) Inventor: Austin, Kenneth, Northwich, Cheshire (GB)
(74) Representative: Cardwell, Stuart Martin

(57) **Abstract**

An electronic identity device is proposed for securing to equipment, especially a vehicle, and has anti-tampering protection. The device is intended to prevent the identity of a vehicle being changed unknowingly. The device comprises at least a control processor (10) having a memory containing accessible data unique to the equipment (for example a vehicle chassis number and/or engine number), and preferably a slave processor (20). The device also comprises means (1, 7, 8) generating a security signal and means for detecting any lack of integrity of the security signal to generate a tamper warning signal. The security signal is generated repeatedly irrespective of whether the vehicle is in operation. More particularly, the security signal is transmitted over a communication link (18) in the form of fibre optic cabling which is adhered to the equipment. Any attempt to remove the electronic device or tamper with the cabling will corrupt the security signal and therefore generate a tamper warning signal.

## Description

The present invention relates to an electronic identification system with anti-tampering protection.

One particular application for the subject of the present invention is for vehicles. Auto-theft is increasing whilst recovery rates are decreasing which is said to indicate an increasing occurrence of thefts where identity of vehicles are changed, ie. chassis and/or engine identification plates from one vehicle are removed and replaced with plates from another vehicle. The current plating system makes this easily possible.

An electronic identification system has been proposed for a motor cycle in which an integrated circuit with appropriate chip is programmed with the motorcycle chassis number and can be read remotely. The chip is proposed to be secured within the frame of the motorcycle and thus serves as a means of checking that other data plates visible externally, (probably of conventional rivet-on type), show the correct information. It is envisaged that such a chip could be located and transferred relatively easily to another motorcycle since there is no provision for detecting tampering, for example, moving of the chip.

We are particularly concerned with the application to automobiles, but the invention has application to any situation where the identity of equipment is recorded and where it is desired to try and preserve that identity and/or to know if any attempt is made to change the identity.

It is an aim of the present invention to provide a more secure electronic identification system.

An electronic identification system according to the present invention is provided with means for generating a security signal and means for detecting any lack of integrity of the security signal and generating a tamper warning signal.

Accordingly, an aspect of the invention provides an electrical identification device for securing to equipment, comprising a memory containing accessible data unique to the equipment, means for generating a security signal and means for detecting any lack of integrity of the security signal and generating a tamper warning signal.

Another aspect of the invention provides a method of detecting tampering of an electronic identity device, the method comprising generating and outputting from the device a security signal, receiving the security signal and checking for any lack of integrity and generating a tamper warning in response to a lack of integrity.

The transmitted security signal can have different levels of sophistication, the aim being to produce a signal whose integrity or entirety can be checked and one which is difficult to replicate. This is provided to make it difficult to bypass the signal to facilitate re-positioning of the electronic identification system. The means signalling tampering may be a visual indicator and/or an audible one. Optionally the control processor may have a display for displaying the warning and/or selected stored data.

In one embodiment the electronic identification system comprises a single processing unit and a signal transmission line (ie. communication link), preferably a fibre optic link, which is adhered in place using such as an epoxy adhesive which fuses with the cabling making it virtually impossible to remove from the structure to which it is adhered. The processing unit comprises means for storing data pertinent to the identity of the equipment. Preferably the electronic identification system has associated means for inputting the data to the processing unit, means for accessing the data, and means for displaying the data. Conveniently the associated means comprises a programming unit, say of hand-held type, and communicating with the processing unit by a suitable communications link, be it of plug-in type or wireless type using say radio or I.R. frequency.

Where the electronic identification system is applied to an automobile then the structure will be the body or chassis parts of the vehicle. Removal of the processing unit will also require removal of the transmission cable and this will affect the integrity of the signal if any attempt is made to remove cabling or intercept the signal it carries.

In an alternative, two electronic units are provided with a communication link therebetween, preferably by way of cabling, but it may be a wireless connection where the likes of a phased signal is employed and any out of phase return signal can be detected if one unit is moved relative to the other.

Preferably the means detecting integrity of the security signal includes checks for one or more of the following; namely:- signal present, signal level correct, signal timing correct and a pseudo-random code correct.

The present invention will now be described further, by way of example only, with reference to the accompanying drawings, in which:-
Figure 1 illustrates diagrammatically the application of one embodiment of the invention to an automobile,
Figure 2 is a perspective view of part of a connecting link employed in the embodiment of Figure 1,
Figure 3 is a block diagram of the control processor,
Figure 4 illustrate a remote unit for addressing the control processor,
Figure 5 is a block diagram for a slave processor,
Figure 6 is a circuit diagram for one embodiment of signal detection circuitry, and
Figure 7 is a schematic view illustrating diagrammatically signals exiting and entering the control processor.

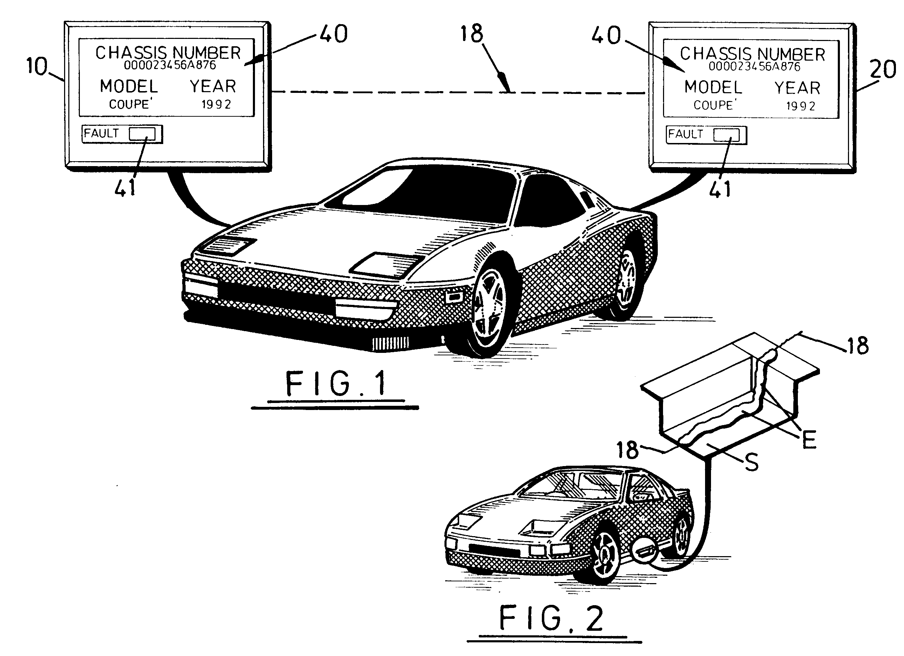

Referring to the drawings, the electronic identification system of the invention is described with reference to its application to an automobile. In Figure 1 there is shown a representation of a vehicle to which the electronic identification system is applied. In the illustrated embodiment this comprises a first unit 10, referred to as a control processor, a second unit 20, referred to as a slave processor, and a fibre optic communications link 18 connecting the two units. These two units are secured to the vehicle in the desired location and by any convenient means. As illustrated in Figure 1, each unit carries physical markings (in area 40) identifying the vehicle, in this instance showing the chassis number, the model and year. The information displayed will be determined by the manufacturer. This can be regarded as the equivalent of the existing identification plates. In the illustration of Figure 1 both units have a fault indicator 41. This is illustrated as a light. The operation of the fault indicator will be described further hereinafter.

It is proposed to adhere the fibre optic communications link 18 to the structure 5 of the vehicle using the likes of an epoxy adhesive E. Thus it can follow closely the configuration of the structure as illustrated with reference to Figure 2. The cable and adhesive fuse together preventing removal of the fibre. The communication link is an important component of the illustrated embodiment as it provides a security provision as will be apparent from the description hereinafter. According to the invention a security signal is passed down the cabling and any attempt to remove the cabling will interrupt or otherwise interfere with the security signal and this can be detected as described further hereinbelow.

Whilst Figure 1 illustrates a two unit installation, it is possible to have further 'slave' units connected to the control processor, or to have just one unit such as the control processor in which case the communication link will be in the form of a loop extending for some distance over the structure of the vehicle and back to the processor unit 10.

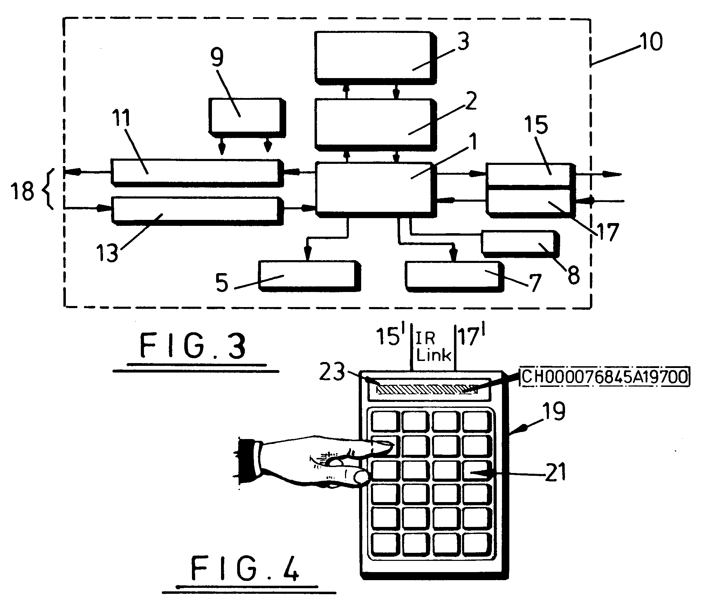

Reference is now directed to Figure 3 which illustrates the control processor make-up in further detail. It comprises a logic unit 1, random access memory 2, permanent memory (EPROM) 3, a display 5, timing circuitry 7, random number generator circuitry 8, a battery power unit 9, optical transmit and receive interfaces 11, 12, and communications transmitter and receiver circuitry 15, 17.

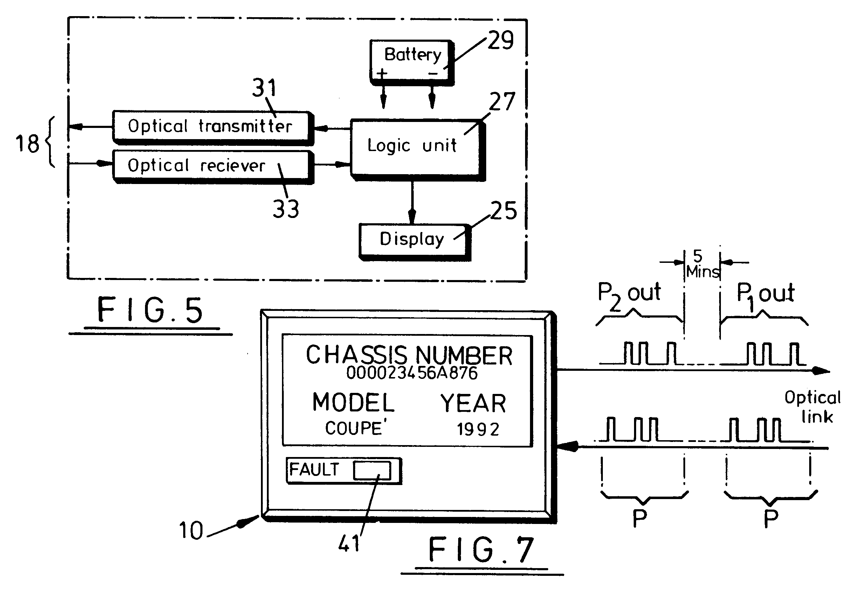

Referring now to Figure 5, there is shown a block diagram for a slave processor 20 which comprises a logic unit 27, display 25, battery power unit 29 and optical transmit/receiver interface 31, 33. Where the control processor 10 works through the slave processor 20 the latter may simply operate on the received signal and then transmit an appropriate signal back to the central processing unit as expected by the processing unit. Thus a signal received by the optical receiver 33 is converted to an electrical signal. The logic unit 27 may simply serve to impart a time delay to the signal before passing to the transmitters 31' to be despatched over the communication link 18 to the control processor 10. Alternatively the signal received by the processor may be coded and the logic unit 27 may be programmed to transmit a signal which is determined by the received signal. The display 25 may be simple fault light to indicate that the signal received does not conform to that expected and thereby generating a tamper warning signal.

The use of a fibre optic link is particularly advantageous because any attempt to remove it will have a marked affect on its signal transmission properties and is less likely to be prone to electrical interference which could arise if an electrically conductive connecting link were employed.

Once installed in a vehicle, and this may be as original equipment or as a retrofit item, it will be initialised and programmed for use. Conveniently this is done by a separate unit, for example as illustrated in Figure 4. The programming unit 19 has a key pad 21 and a display 23. In the illustrated embodiment an infra-red transmit and receive communications link 15', 17' is provided to communicate with the communication link 15, 17 of the control processor unit 10. Data input using the key pad is communicated to the processing unit as described further hereinafter. The programming modes include provision to send an identification code; to send new information to the processing unit; and to receive information from the processing unit including confirmation of any new information.

In its most basic form the identification system can simply record the chassis and/or engine number of the vehicle. This information can be accessed when it is desired to confirm that the electronic identification corresponds to any mechanical identification on the vehicle. The electronic identification system could replace the conventional mechanical identification system. Where there are legitimate reasons to change the chassis or engine numbers the processing unit can be reprogrammed to accept a revised number subject to provision of an acceptable authorisation code. We prefer an arrangement whereby the original data is retained and the date of change recorded. It is possible in this way to build up a complete catalogue of events which have occurred during the life of a vehicle, for example service intervals, any repairs or accident damage, service data, etc. We envisage a master code, the use of which will permit changes of fundamental data such as chassis and engine number, and subsidiary codes authorised on a one use only basis so changes affecting the vehicle can be logged but without changing the basic data.

The permanent memory 3 is provided to store data pertinent to the vehicle, which data can be accessed to verify the identity of the vehicle, etc. In addition, the processor unit is used to generate a security signal. The random number generator circuitry 8 in conjunction with the timer circuitry 7 is used by the logic unit 1 to generate an electronic security signal which is transmitted to the optical transmitter 11 where it is converted to an optical signal for transmission along the optical line of link 18. The signal is conveniently a unique series of pulses eg. P, P₁out, P₂out) as shown in Figure 7.

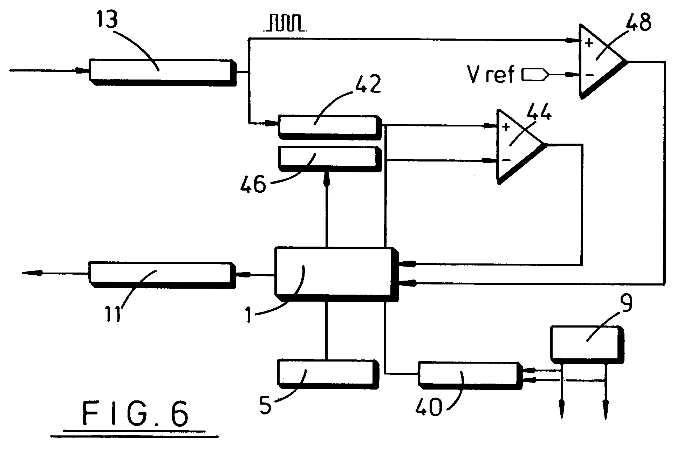

In effect the security signal constitutes a message transfer and the control processor is preferably arranged to initiate a message transfer at prescribed intervals, or more preferably at random intervals and thus occurs periodically. Effectively each message checks the integrity of the link and that any slave processor is present. If the link is broken or either processor is removed, a tamper warning is signalled at the display 5. This may be a fault light 41 referred to above. Thus, for each outgoing pulse P₁out etc., a corresponding pulse P should be detected. The most basic check is that a signal is present at the receiving station. A more sophisticated check is that the signal level is correct. This helps to avoid a situation where part of the signal is bled off from the cabling and represented to the processing unit thereby enabling the cabling to be broken. The signal detecting circuitry is described further with reference to Figure 6.

More particularly, the circuitry comprises a first level detect 40 connected between battery 9 and logic unit 1, second level detect 42 connected between optical receiver 13 and one input of a differential amplifier 44, a voltage reference 46 is connected between logic unit 1 and a second input of the differential amplifier. In operation, level detect 40 detects the battery condition level and inputs the measured voltage into logic unit 1. For example the logic unit may have a look-up table which gives the required voltage reference value corresponding to the measured voltage of the battery and this voltage reference value is fed to the voltage reference 46. The voltage reference value corresponds to the expected level of the return signal received by optical receiver 13, taking into account the expected level of voltage loss. Level detect 42 measures the level of the incoming signal received by optical receiver 13 and outputs this level to an input of the differential amplifier, the other input being from the voltage reference 46. From the output of the differential amplifier 44, which is fed to an input of logic unit 1, the logic unit determines whether the received signal level is within a predetermined range and if not, then the logic unit registers a fault. For example, if a part of the signal has been bled off then the drop in the received signal voltage level will be detected by the combination of the differential amplifier 44 and logic unit 1 and a fault/warning signal operated.

A simpler test to determine whether the link has been tampered with is to detect whether a signal is received by optical receiver 13. This is performed by the use of a second differential amplifier 48. One input to the differential amplifier is from the optical receiver 13 and the other input is a reference voltage level. The output from the differential amplifier is fed into an input of the logic unit and compared by the logic unit with the known output value of the differential amplifier if there is no signal present, so as to determine whether optical receiver 13 has received a signal.

More particularly still the transmitted signal is pulse coded and the presence of a prescribed time pulse signature is checked at the receiving station as described further hereinafter.

Initialisation of the unit is conveniently triggered using the remote programming unit 19. The random number generator circuitry 8 and timing circuitry 7 are used by the logic unit 1 to generate a signal for transmission by the control processor. The preferred signal comprises a burst of pulses (P₁out, P₂out, etc.) the interval and timing for the pulse stream being determined by the random number generator as is the coding of the pulses so that they are different each time. A copy of the signal to be sent is stored in temporary memory 2 and the time of despatch is recorded in the temporary memory 2. On initialisation, ie. first use of the unit on command from the programming unit, the control processor notes the time loop delay for the signal. Ie. the time between despatch and receipt, and this time delay is stored in the permanent memory 3 as a reference. It is also proposed to have the initialisation sequence copy certain data in the permanent memory 3 to the temporary (volatile) memory 2. This may be the likes of the chassis number or other generated code data. This data in the temporary memory will be lost in the event of the power to the unit being disconnected. Accordingly, the logic unit includes a checking mode to signal a fault or warning condition in the event that the data copied between the permanent and temporary memory does not correspond. In order to avoid an erroneous tamper warning due to the battery level dropping below the operating threshold, the logic unit includes provision for checking battery level (circuity 40 of Figure 6). The logic unit 1 monitors the battery level and triggers a battery low/replacement signal. This may use either a specific warning means (visual or oral) or may be by emitting a special signal on the fault/warning means (5). In use, the periodic signal pulse are sent from the logic unit to the optical transmitter 11 where they are converted into an optical signal P₁out, P₂out, etc. which is transmitted along the optical line 18. In the case of a single unit the optical link returns to the optical receiver 13 where the signal is converted back to an electrical one. The received signal P is input to the logic unit 1 which checks the pulse signal for correspondence with the signal as sent and stored in the memory 2, ie. that a received pulse corresponds to a transmitted pulse and that it is received within the expected time delay having regard to the reference time loop delay established on initialisation.

Access to the data in the memory of the processor unit 10 is gained by inputting an acceptable access code. This may be input from the access unit 19. It is proposed that there will be a master accept code generated when the unit is initially programmed and a plurality of auxiliary codes permitting different access levels to the processing unit, for example a read only access, and others permitting updating of information. These codes are stored in the permanent memory 3. An identification code is transmitted from the access or programme unit 19 via transmit port 15' and is received by communications receiver 17 of the control processor 10. The transmitted code is checked against valid codes stored in the memory and if valid allows the user access to the level of information assigned to that code. Thus a master code could permit writing in new data, eg. new chassis or engine number. This is preferable as an additive basis, retaining a record of the old data and listing the date of the change. The reason for the change can also be stored. Less privileged codes may only allow writing of less sensitive instructions, for example details of repairs and/or service records. It is proposed that a write only code (say one of a number of acceptable codes pre-programmed into the unit) be given to an authorised person by, say the factory, for the purpose of updating information and that these be used on a once-only basis. Ie. once the changed information has been entered further access for changing data is precluded.

Other codes may be available as read only data. Thus, it is possible to envisage a general code by which the identity of the car can be checked, possible also whether it has a current MOT and complies with other legal requirements as to tax, insurance, etc. Such information could be accessible for example by the police. The information stored and accessible could include, for example, the name and address of the owner.

It is relatively straightforward to incorporate all the required memory capacity and logic circuitry on a custom integrated circuit in conjunction with the optical cable link 11, 13 I.R. communications link 15, 17, display 5 and power source 9. An LCD display may be used so that the processor unit 10 can display stored data. The unit may have a test button facility for cycling through same or all of the stored data.

## Claims

1. An electronic identity device for securing to equipment, comprising a memory containing accessible data unique to the equipment, characterised by means (10) for periodically generating a security signal and means (10, 20) for detecting any lack of integrity of the security signal and generating a tamper warning signal.

2. An electronic identity device as claimed in claim 1 comprising a communications link (18) carrying the security signal and adhered to the equipment.

3. An electronic identity device as claimed in claim 2, in which the communications link comprises fibre optic cabling.

4. An electronic identity device as claimed in claim 2 or 3, in which the communications link comprises a loop connecting transmit and receive ports of signal generating and signal detecting circuitry.

5. An electronic identity device as claimed in claim 2, 3 or 4, in which the communications link (18) communicates with a slave processor (20).

6. An electronic identity device as claimed in any one of the preceding claims in which the means detecting lack of integrity of the security signal includes means for detecting one or more of:
the presence or absence of a signal;
the level of the signal;
the timing of the signal;
the signature of the signal.

7. An electronic identity device as claimed in any one of the preceding claims, in which the security signal comprises a series of pulses, the signature of which is stored in memory for comparison with the received signal.

8. An electronic identity device as claimed in claim 7, in which the time of despatch of the pulses is stored in memory and the received time is compared with a time delay stored in the memory.

9. An electronic identity device as claimed in any one of the preceding claims in which operation of the security signal generation means and integrity check is continuous after initialisation of the device.

10. An electronic identity device as claimed in any preceding claim in which the security signal is transmitted over a signal path and any alteration of the signal path is detected to generate the tamper warning signal.

11. A method of detecting tampering of an electronic identity device secured to equipment, characterised in that the method comprises periodically generating and outputting from the device a security signal, receiving the security signal and checking for any lack of integrity and generating a tamper warning in response to a lack of integrity.

12. A method as claimed in claim 11 in which the signal is transmitted over a communication link comprising fibre optic cabling adhered to the equipment to which the electronic identity device is secured.

13. A method as claimed in any one of claims 11 or 12 in which the means detecting lack of integrity the security system detects one or more of:-
the presence or absence of a signal;
the level of the signal;
the timing of the signal;
the signature of the signal.

14. A method as claimed in any one of claims 11, 12 or 13 in which the security signal comprises a series of pulses, and the method further comprising storing the signature of the pulses in memory and comparing with the received signal.

15. A method as claimed in any one of claims 11 to 14 comprising storing in memory the time of despatch of the security signal and comparing the received time with a time delay stored in memory.
